# EUROPEAN PATENT APPLICATION

(11) **EP 3 096 206 A1**
(43) Date of publication of application: **23.11.2016**
(21) Application number: 16164778.9
(22) Date of filing: 12.04.2016
(51) Int. Cl.: G06F 3/01

(54) **HAPTIC EFFECTS BASED ON PREDICTED CONTACT**

(30) Priority: 20.05.2015 US 201514717393
(71) Applicant: Immersion Corporation, San Jose, CA 95134 (US)
(72) Inventor: LEVESQUE, Vincent, Montreal QC H2J2R1 (CA); CRUZ-HERNANDEZ, Juan Manuel, Montreal QC H3Z 1T1 (CA); HAMAM, Abdelwahab, Montreal QC H2X 3R4 (CA); KHOSHKAVA, Vahid, Montreal QC H2X 3R4 (CA)
(74) Representative: Hofstetter, Schurack & Partner

(57) **Abstract**

A haptically enabled device has a user interface and generates haptic effects. The device receives an indication of a future contact by a user with the user interface based on an existing contact by the user on the device and, based on the indication, predicts a time and a location of the contact. Based on the prediction, the system determines a responsive haptic effect, and generates the responsive haptic effect using a haptic output device.

## Description

### FIELD

One embodiment is directed generally to a haptic effects, and in particular to haptic effects generated on a device.

### BACKGROUND INFORMATION

Portable/mobile electronic devices, such as mobile phones, smartphones, camera phones, cameras, personal digital assistants ("PDA"s), etc., typically include output mechanisms to alert the user of certain events that occur with respect to the devices. For example, a cell phone normally includes a speaker for audibly notifying the user of an incoming telephone call event. The audible signal may include specific ringtones, musical snippets, sound effects, etc. In addition, cell phones may include display screens that can be used to visually notify the users of incoming phone calls.

In some mobile devices, kinesthetic feedback (such as active and resistive force feedback) and/or tactile feedback (such as vibration, texture, and heat) is also provided to the user, more generally known collectively as "haptic feedback" or "haptic effects". Haptic feedback can provide cues that enhance and simplify the user interface. Specifically, vibration effects, or vibrotactile haptic effects, may be useful in providing cues to users of electronic devices to alert the user to specific events, or provide realistic feedback to create greater sensory immersion within a simulated or virtual environment.

### SUMMARY

The invention is directed to a method of providing haptic feedback on a device having a user interface with the features of claim 1. The invention is further directed to a haptically enabled system according to claim 7 and a computer-readable medium having instructions stored thereon according to claim 15. One embodiment is a haptically enabled device that has a user interface and generates haptic effects. The device receives an indication of a future contact by a user with the user interface based on an existing contact by the user on the device and, based on the indication, predicts a time and a location of the contact. Based on the prediction, the system determines a responsive haptic effect, and generates the responsive haptic effect using a haptic output device.

### BRIEF DESCRIPTION OF THE DRAWINGS

Fig. 1 is a block diagram of a haptically-enabled mobile device or system that can implement an embodiment of the present invention.
Fig. 2 is a flow diagram of the functionality of the system of Fig. 1 when generating a haptic effect in response to a prediction that an object will contact the system in accordance with an embodiment.

### DETAILED DESCRIPTION

One embodiment predicts the time of contact and the location of contact with a user and a mobile device. Based on the prediction, a haptic effect is generated on the mobile device.

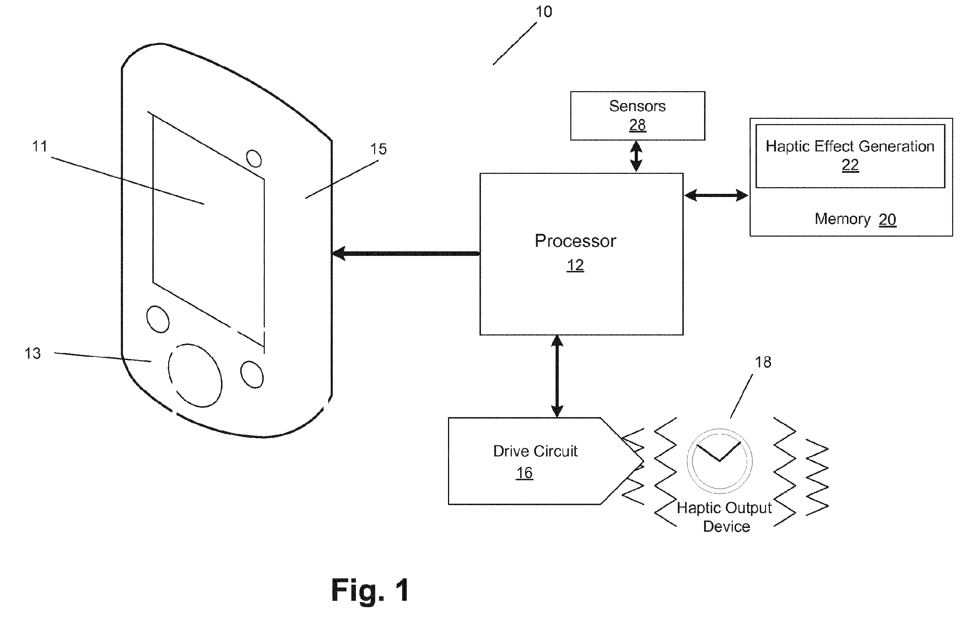

Fig. 1 is a block diagram of a haptically-enabled mobile device system or system 10 that can implement an embodiment of the present invention. System 10 includes a touch sensitive surface 11 or other type of user interface mounted within a housing 15, and may include mechanical keys/buttons 13. Internal to system 10 is a haptic feedback system that generates haptic effects on system 10. In one embodiment, the haptic effects are generated on touch surface 11 or on any other part of system 10.

The haptic feedback system includes a processor or controller 12. Coupled to processor 12 is a memory 20 and a drive circuit 16, which is coupled to a haptic output device 18. Processor 12 may be any type of general purpose processor, or could be a processor specifically designed to provide haptic effects, such as an application-specific integrated circuit ("ASIC"). Processor 12 may be the same processor that operates the entire system 10, or may be a separate processor. Processor 12 can decide what haptic effects are to be played and the order in which the effects are played based on high level parameters. In general, the high level parameters that define a particular haptic effect include magnitude, frequency and duration. Low level parameters such as streaming motor commands could also be used to determine a particular haptic effect. A haptic effect may be considered "dynamic" if it includes some variation of these parameters when the haptic effect is generated or a variation of these parameters based on a user's interaction.

Processor 12 outputs the control signals to drive circuit 16, which includes electronic components and circuitry used to supply haptic output device 18 with the required electrical current and voltage (i.e., "motor signals") to cause the desired haptic effects to be generated. System 10 may include more than one haptic output device 18, and each haptic output device may include a separate drive circuit 16, all coupled to a common processor 12. Memory device 20 can be any type of storage device or computer-readable medium, such as random access memory ("RAM") or read-only memory ("ROM"). Memory 20 stores instructions executed by processor 12, such as operating system instructions. Among the instructions, memory 20 includes a haptic effect generation module 22 which is instructions that, when executed by processor 12, generate haptic effects based on predicted contact, as disclosed in more detail below. Memory 20 may also be located internal to processor 12, or any combination of internal and external memory.

Haptic output device 18 may be any type of device that generates haptic effects. In one embodiment, haptic output device 18 is an actuator that generates vibratory type haptic effects. Actuators used for this purpose may include an electromagnetic actuator such as an Eccentric Rotating Mass ("ERM") in which an eccentric mass is moved by a motor, a Linear Resonant Actuator ("LRA") in which a mass attached to a spring is driven back and forth, or a "smart material" such as piezoelectric, electroactive polymers or shape memory alloys. Haptic output device 18 may also be a device such as an electrostatic friction ("ESF") device or an ultrasonic surface friction ("USF") device, or a device that induces acoustic radiation pressure with an ultrasonic haptic transducer. Other devices can use a haptic substrate and a flexible or deformable surface, and devices can provide projected haptic output such as a puff of air using an air jet, etc.

In embodiments with a touch surface 11, the touchscreen recognizes touches, and may also recognize the position and magnitude of touches on the surface. The data corresponding to the touches is sent to processor 12, or another processor within system 10, and processor 12 interprets the touches and in response generates haptic effect signals. Touch surface 11 may sense touches using any sensing technology, including capacitive sensing, resistive sensing, surface acoustic wave sensing, pressure sensing, optical sensing, etc. Touch surface 11 may sense multi-touch contacts and may be capable of distinguishing multiple touches that occur at the same time. Touch surface 11 may be a touchscreen that generates and displays images for the user to interact with, such as keys, buttons, dials, etc., or may be a touchpad with minimal or no images.

System 10 may be a handheld device, or mobile device, such a cellular telephone, personal digital assistant ("PDA"), smartphone, computer tablet, gaming console, etc., or may be any other type of device that provides a user interface and includes a haptic effect system that includes one or more actuators. The user interface may be a touch sensitive surface, or can be any other type of user interface such as a physical button, mouse, touchpad, mini-joystick, scroll wheel, trackball, door knob, game pads or game controllers, etc. System 10 may be a flexible/bendable device that generates haptic effects when physically manipulated, in which case the "user interface" is the flexible/bendable portion of the device itself.

System 10 further includes one or more sensors 28 coupled to processor 12. Sensors 28, in combination with processor 12, predict where and when a user will contact system 10, for example on a specific portion of touchscreen 11, or a specific physical key 13. If system 10 is a flexible/bendable device, the predicted contact could be a prediction of a type and amount of bending, squeezing, etc. The prediction can be an upcoming other type of manipulation, such as a prediction that the user is about to put down system 10.

Sensor 10 in one embodiment is a proximity sensor. A proximity sensor detects when a finger (or stylus) is in close proximity to but not in contact with touchscreen 13 or other portion of system 10. The proximity sensor may also detect location (e.g., x, y, z), direction, speed and acceleration, orientation (e.g., roll, pitch, yaw), etc. of the finger relative system 10. The proximity sensor may use any technology that allows the proximity of a finger or other object to system 10 to be sensed. For example, it may be based on sensing technologies including capacitive, electric field, inductive, hall effect, reed, eddy current, magneto resistive, optical shadow, optical visual light, optical IR, optical color recognition, ultrasonic, acoustic emission, radar, heat, sonar, conductive or resistive and the like.

In one embodiment, sensors 28 include one or more proximity sensors that each generate a sensing field above touchscreen 11 and that produce signals when an object disturbs or intercepts the sensing field(s). Each sensing field typically generates its own signals when disturbed. In one embodiment, a single sensing field is used to cover the entire touchscreen 11 surface. In another embodiment, a single sensing field only covers a portion of the touchscreen 11 surface. In another embodiment, multiple sensing fields are used to cover the entire touchscreen 11 surface. Any number of sensing fields may be used. In some cases, in order to perform tracking, the sensing fields may even be distributed as a pixelated array of nodes. In some embodiments, the proximity sensing is limited to sensing proximity only when the object is within a relatively short distance to the touchscreen, and only in response to movement of the object relative to the touchscreen.

In another embodiment, sensors 28 predict contact with system 10 using back-of-device grip changes, as disclosed, for example, in M. Noor et al., "28 Frames Later: Predicting Screen Touches From Back-of-Device Grip Changes", CHM 2014, April 26-May 1, 2014, the disclosure of which is hereby incorporated by reference. In this embodiment, sensors 28 are multiple low-resolution capacitive touch sensors placed around system 10, with a machine learning approach implemented by processor 12 that can predict a touch position approximately 200ms before contact with an accuracy of approximately 18mm.

In another embodiment, sensors 28 can be in the form of muscle activation sensors. For example, an armband placed on a user's forearm can sense muscle activation within the forearm. The muscle activation can be used to predict a future contact with system 10 by the user.

In other embodiments, sensors 28 can be three dimensional cameras, such as "Kinect" from Microsoft Corp., capacitance sensing or pressure sensing. For example, "swept frequency capacitive sensing", disclosed in, for example, M. Sato et al., "Touché: Enhancing Touch Interaction on Humans, Screens, Liquids, and Everyday Objects", Proceedings of CHI 2012: ACM. pp. 483-492, the disclosure of which is hereby incorporated by reference, can be used to detect the posture of a hand against an object, such as the number of a user's fingers or the type of grip against a door handle. This type of sensing can be used to detect changes in hand posture or grip and predict touches. Distributed pressure sensors can also be used to predict changes in grip. Other sensors such as accelerometers may not be sufficient to predict touch input in isolation, but may improve accuracy when used along with other sensors as previously described. Embodiments, for example, can detect a change in posture as well as a related motion of the phone, and combine the information to better predict the touch input. Further, an eye tracker can be used for the same purpose since the user is more likely to look at the location where the touch will land.

In general, haptic feedback or effects typically are not produced until a finger or other object touches a touchscreen or presses a button. The touch gesture, however, can begin well before the finger touches the interface and includes the motion of the finger towards the touch surface or button. As described, a prediction of touch or other contact can be used in embodiments to produce haptic feedback before the finger touches the control, or can be used as preparation to produce haptic feedback at the exact moment the finger touches the interface. In some embodiments, the prediction is based on an existing contact by the user on the device, instead of using non-contact movements or proximities.

In one embodiment, contact prediction is used for spatial rendering, in which haptic feedback is produced in the hand holding the device as a touch gesture is initiated, prior to completing the touch input. A haptic effect can, for example, simulate the deflection of a virtual button coming out of the touchscreen and culminate with a click as the touchscreen is touched and the button activated.

In another embodiment, contact prediction is used for pre-enabled output. For example, haptic actuators can be energized while the touch gesture is in progress so as to be at the maximum strength when the finger touches the screen. An ERM, for example, could be energized in advance so as to produce its peak acceleration at the moment of touch.

In another embodiment, contact prediction is used for pre-computation. For example, any computations required to produce the haptic effect can be pre-computed while the touch gesture is in progress, removing any delays in the haptic feedback. For example, a collision detection algorithm may need to run in order to determine the effect of a touch input and the resulting haptic feedback. Similarly, a haptic effect may need to be computed in the form of a digital file (e.g., a .wav file or other Pulse-code modulation ("PCM") data) and transmitted to a separate device for playback, such as an a wearable bracelet or any type of device in remote communication with processor 12 and that includes its own haptic output device for generating haptic effects.

In another embodiment, contact prediction is used for action preview, so that haptic feedback can be produced ahead of a touch input in order to indicate the result of the input. For example, the user can feel an unpleasant vibration as the finger approaches a "Delete" button. The display could also change its shape in order to make the input easier or harder. A flexible display, for example, could bend away from a dangerous touch input.

Action preview in embodiments can also be used for other types of user input besides touch input. For example: (1) an action against a physical control such as a button, slider or trigger; (2) a change in a gesture, such as the prediction that a user is about to interrupt a sliding gesture and lift off their finger; (3) a change in another type of input such as bending or squeezing of a phone; or (4) a manipulation of a device, such as the fact that the user is about to put down their phone.

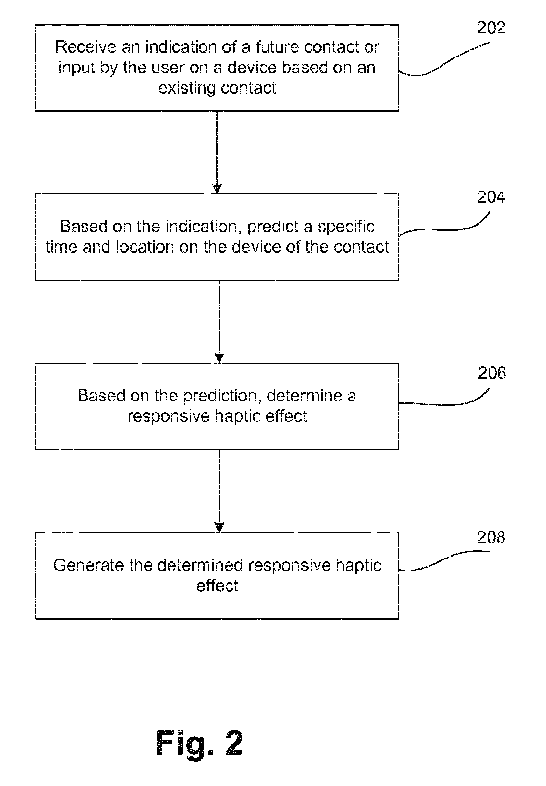

Fig. 2 is a flow diagram of the functionality of system 10 of Fig. 1 when generating a haptic effect in response to a prediction that an object will contact system 10 in accordance with an embodiment. In one embodiment, the functionality of the flow diagram of Fig. 2 is implemented by software stored in memory or other computer readable or tangible medium, and executed by a processor. In other embodiments, the functionality may be performed by hardware (e.g., through the use of an application specific integrated circuit ("ASIC"), a programmable gate array ("PGA"), a field programmable gate array ("FPGA"), etc.), or any combination of hardware and software.

At 202, system 10 receives an indication of a future contact or input by the user (i.e., an action by the user that indicates that contact with system 10 will or should occur) based on an existing contact by the user. The eventual contact can include touches to a touch screen as well as actions against physical controls such as buttons, triggers, and sliders. The eventual contact can also include changes in an ongoing gestures, such as predicting when a user will interrupt a sliding gesture and lift off the screen. It could also include changes in grip related to other input mechanisms such as bending, twisting or squeezing a flexible device. The existing contact can include a current sliding gesture or other gesture that involves contact with system 10, a current grip on system 10, etc.

At 204, based on the indication, system 10 predicts a specific time and location on system 10 of the contact using input from sensors 28.

At 206, based on the prediction, system 10 determines a responsive haptic effect. The responsive haptic effect can be based on a determination that a haptic effect needs to be produced before the input is performed. A sequence of vibration effects, for example, could be produced at specific times before and after a touch input. For example, vibration pulses of increasing intensity could be produced 100, 75, 50 and 25ms before the input, followed by a strong vibration at the exact time of the input.

System 10 could also determine the result of the impending touch input and produce a haptic effect that previews this information for the user. A "dangerous" operation (e.g., delete a file) could, for example, be associated with an unpleasant haptic effect ahead of the touch.

System 10 could also determine the haptic effect to be played at the moment of the touch input and energize the actuator in advance. An ERM, for example, may need to be activated slightly before the input so that it reaches peak acceleration at the correct time.

System 10 could similarly perform pre-computations to determine the haptic effect to be played and to prepare it. This could include the computation of a simulation and its resulting haptic feedback. A 3D model, for example, could require the computation of collisions and resulting forces to be simulated. A haptic effect that simulates brushing against a simulated material could require computation of the friction and resulting vibrations. In some cases, haptic effects may also need to be transmitted over relatively slow communication channels ahead of playback (e.g., sending a .wav file on Bluetooth).

At 208, system 10 generates the haptic effect determined at 206 by generating and sending a haptic effect signal to a haptic output device.

In some embodiments, the range of detection for the object for which a contact is to be predicted is relatively large. For example, in some embodiments, the object does not have to be near or proximate (i.e., able to be detected by a proximity sensor) to the touchscreen to detect the beginning of a touch gesture. Further, in one embodiment, an object can be detected when it is being pulled away from the device, and out of the "line of sight" of a proximity sensor. As a result, embodiments can apply or prepare haptic effects as soon as an object begins to move, instead of having to wait for it to reach a certain distance from a touchscreen.

Further, embodiments can predict gestures even when there is no movement of the object. For example, embodiments can detect that a finger that is in contact with a touchscreen is about to lift off, or slide, by detecting changes in posture through the palm of the user, where the phone rests against the hand (i.e., grip changes).

As an example of the use and implementation of embodiments of the present invention, assume a confusing dialog pops-up on "Alice's" tablet as she is working on an important task. She quickly moves her finger towards the "OK" button to dismiss it but feels a strong vibration as she approaches it. She takes a closer look and realizes that she was about to accidently turn off her phone, which has low battery.

As another example, assume "Bob" is playing a game on his smartphone using virtual buttons. He holds a finger above one of the buttons and feels his laser gun charging with the ramp up of a vibration. Once he feels that it is fully charged, he completes the motion and fires the laser gun.

As another example, assume "Charles" is playing a console game that produces feedback on two wireless armbands that he is wearing. Each time an event occurs, the console sends digital data, such as a .wav file, to the armbands for haptic effect playback. The process takes hundreds of milliseconds, but Charles never notices any delays because the console predicts when he is going to touch a button and sends the haptic effect signal data in advance.

As another example, assume "Dan" is interrupted by a text message as he is about to send an email on his smartphone. He replies to the text message and starts putting the phone down on the table. As he does so, however, the phone vibrates gently to remind him about the unsent email. He picks up the phone and hits the send button.

As another example, assume "Eric" uses a flexible game controller to play a game on his TV. He is grasping the sides of the controller and bending it to make a bird flap its wings. He changes his grip to instead use the controller's virtual buttons. Unbeknownst to him, the controller detected this change in gesture and pre-loaded haptic effects so that he can feel his machine gun instead of the bird's wings.

In general, some tablet computers and other handheld devices may be used with two hands. However, known uses of capacitive touchscreens and proximity sensing cannot determine if the screen is being touched with the finger of one hand or the other. In contrast, embodiments disclosed above (e.g., using back-of-device grip changes) can make a contact prediction that includes a determination of which hand is being used in the upcoming contact, and can in response adapt the user interface and haptic feedback accordingly. For example, with a painting application, different tools may be associated with different fingers or hands. Touching with the left index finger could apply paint, with matching haptics. Touching with the right index finger could erase it, again with matching haptics.

Contact prediction in accordance with embodiments can be used for situations where the user does not even want to touch the screen. For example, a surgeon may prefer to press a button without touching the screen for sanitary reasons. Similarly, it may be faster to type on a keyboard or tap on a game controller without having to touch anything directly. Embodiments that generate haptic feedback regardless of actual contact can add to the missing confirmation feedback, such as generating haptic feedback as applied to a non-touching hand (e.g., the hand holding the device).

Contact prediction in accordance with embodiments can be used to adapt a user interface automatically. The buttons on a touchscreen can, for example, move to be placed where the user is about to touch based on the prediction. Similarly, the content of a game could shift to increase or decrease the level of difficulty as a player's finger approaches the screen.

As disclosed, embodiments can detect grip changes and therefore predict future actions, such as putting a phone down on a table, putting a phone in a pocket or bag, dropping a phone, tilting a phone, etc. One embodiment uses contact prediction to detect when a user is about change the orientation of a phone and generates a haptic effect if the application being used does not support this orientation. For example, some mobile operating systems and applications allow the orientation of the screen to be locked. An e-book application, for example, can generate a haptic effect when the orientation of a phone is changed but the orientation of the application is locked.

Embodiments can be used to predict contact with objects other than handheld devices. For example, sensors on the back of a car seat can detect when a driver is shifting their position in order to reach out and touch a touchscreen infotainment system, and apply haptic effects in response.

As disclosed, embodiments predict a time of contact and a location of contact on a mobile device. As a result of the prediction, a haptic effect is generated by the mobile device that is more optimized and relevant to the ultimate contact. The present invention is further directed to a computer-readable medium having instructions stored thereon according to the following items:
Item 1: A computer-readable medium having instructions stored thereon that, when executed by a processor, cause the processor to provide haptic feedback on a device having a user interface, the providing comprising:
   receiving an indication of a future contact by a user with the user interface based on an existing contact by the user on the device; based on the indication, predicting a time and a location of the contact; based on the prediction, determining a responsive haptic effect; and generating the responsive haptic effect.
Item 2: The computer-readable medium of item 1, wherein the existing contact by the user on the device is a changing grip on the device, and wherein the responsive haptic effect is generated before the contact.
Item 3: The computer-readable medium of item 2, wherein the responsive haptic effect provides an action preview of the contact.
Item 4: The computer-readable medium of item 1, wherein the future contact comprises the user touching a touchscreen of the device.
Item 5: The computer-readable medium of item 1, wherein the future contact comprises the user interfacing with a physical control of the device.
Item 6: The computer-readable medium of item 1, wherein the future contact comprises the user deforming the device.
Item 7: The computer-readable medium of item 6, wherein the deforming comprises the user bending the device.
Item 8: The computer-readable medium of item 1, wherein the existing contact is a user gesture on the device and the future contact comprises a change in the gesture.

Several embodiments are specifically illustrated and/or described herein. However, it will be appreciated that modifications and variations of the disclosed embodiments are covered by the above teachings and within the purview of the appended claims without departing from the spirit and intended scope of the invention.

## Claims

1. A method of providing haptic feedback on a device having a user interface, the method comprising:
receiving an indication of a future contact by a user with the user interface based on an existing contact by the user on the device;
based on the indication, predicting a time and a location of the contact;
based on the prediction, determining a responsive haptic effect; and
generating the responsive haptic effect.

2. The method of claim 1, wherein the existing contact by the user on the device is a changing grip on the device, and the responsive haptic effect is generated before the contact.

3. The method of claim 2, wherein the responsive haptic effect provides an action preview of the contact.

4. The method of claim 1, wherein the future contact comprises the user touching a touchscreen of the device or wherein the future contact comprises the user interfacing with a physical control of the device or wherein the future contact comprises the user deforming the device.

5. The method of claim 4, wherein the deforming comprises the user bending the device.

6. The method of claim 1, wherein the existing contact is a user gesture on the device and the future contact comprises a change in the gesture.

7. A haptically enabled system comprising:
a controller;
a haptic output device coupled to the processor; and
a user interface coupled to the processor;
wherein the controller is configured to:
receive an indication of a future contact by a user with the user interface based on an existing contact by the user on the system;
based on the indication, predict a time and a location of the contact;
based on the prediction, determining a responsive haptic effect; and
generate the responsive haptic effect via haptic output device.

8. The system of claim 7, wherein the existing contact by the user on the system is a changing grip on the system, and wherein the responsive haptic effect is generated before the contact.

9. The system of claim 8, wherein the responsive haptic effect provides an action preview of the contact.

10. The system of claim 7, wherein the existing contact is a user gesture on the user interface and the future contact comprises a change in the gesture.

11. The system of claim 7, further comprising a physical control coupled to the processor;
wherein the future contact comprises the user interfacing with the physical control.

12. The system of claim 7, wherein the user interface comprises a deformable material, and the future contact comprises the user deforming the deformable material.

13. The system of claim 7, wherein the future contact comprises the user changing a resting position of the system.

14. The system of claim 7, further comprising a sensor coupled to the processor, wherein the sensor generates the indication.

15. A computer-readable medium having instructions stored thereon that, when executed by a processor, cause the processor to carry out a method according to one of the preceding claims 1 to 6.
